# EUROPEAN PATENT APPLICATION

(11) **EP 2 258 164 A1**
(43) Date of publication of application: **08.12.2010**
(21) Application number: 10005687.8
(22) Date of filing: 01.06.2010
(51) Int. Cl.: A01G 9/02, A47G 7/02, A47G 7/06

(54) **Bowl for flower arrangements**

(30) Priority: 03.06.2009 IT MI20090180; 03.06.2009 IT MI20090182
(71) Applicant: Plastec S.r.l., 27030 Palestro (PV) (IT)
(72) Inventor: Bertola, Paolo, 27030 Palestro (PV) (IT)
(74) Representative: Valentini, Giuliano

(57) **Abstract**

A bowl for flower arrangements is described consisting of a hollow plastic body (1), comprising an upper portion (3) and a lower portion (2) connected to each other to form one single piece. The upper portion (3) has a larger section than the lower portion (2) in plan view and they are arranged in such a way that a lower part of the lateral wall of the upper portion (3) surrounds an upper part of the lateral wall of the lower portion (2).

## Description

### Field of the invention

The present invention concerns a plastic bowl for the creation of flower arrangements.

These types of bowls are generally designed to house a synthetic sponge, for example a sponge made of foamed polyurethane material. The sponge keeps the flower stems and other decorative elements in the required position for creation of the arrangement and at the same time absorbs the water in order to keep the flowers of the arrangement alive and lush.

### Prior art

The conventional bowls for flower arrangements are made of plastic and generally have a hollow shape, with cylindrical, oval, quadrangular or polygonal section, inside which the sponge is housed. In particular, the body of the bowl has a constant or substantially constant cross section and the sponge made of synthetic material has a height such as to protrude partially from the upper edge of the bowl, so as to permit insertion of the stems, also laterally.

In fact the sponge, previously soaked with water, is inserted inside the hollow body of the bowl so that part of it protrudes from the upper edge of the bowl. The flower stems and decorative elements are then inserted inside the synthetic sponge for creation of the flower arrangement.

The conventional bowls are subject to considerable deformation when a synthetic sponge of dimensions or form different from that of the cross section of the bowl is forced inside during preparation of the flower arrangement.

In fact, to limit production costs, it is usual to use pieces of sponge of one size only and one single form for all the bowls, for example by forcing pieces of sponge with square section into a bowl with circular section.

The conventional bowls also have the drawback that the hollow body of the bowl is deformed under the weight of the contents when it is lifted to transport and move the flower arrangement to the required place.

The deformations sustained by the bowl, in addition to making gripping thereof uncertain during lifting, can be permanent and, in some cases, cause breakage of the bowl. In any case, both during forced insertion of the sponge and during lifting for transport, said deformations can compromise the appearance of the flower arrangement.

A further disadvantage of the conventional bowls is the impossibility of controlling the quantity of water inside them In fact, when the flower arrangement has been completed, it is difficult to gauge the level of water inside the bowl, and it is equally difficult to perform any topping-up operations. For this reason, since it is not possible to establish with certainty whether water is required inside the bowl, the top-up water often runs over the sponge and the excess water overflows from the upper edge.

### S of the invention

The task of the present invention is to provide a bowl, and in particular a bowl for the creation of flower arrangements, able to overcome the problems of the known art.

In the context of this task, an object of the present invention is to propose a bowl made in such a way that the forced insertion of the pieces of sponge does not cause excessive deformation in the bowl.

Another object of the present invention is to propose a bowl which permits simplification of the level control operations and any topping up of the water.

A further object of the present invention is to propose a bowl which facilitates gripping, lifting and/or moving of the bowl.

These objects are achieved by the present invention thanks to a bowl as claimed in claim 1. Further particular characteristics of the present invention are reported in the respective dependent claims.

The bowl for flower arrangements according to the present invention consists of a hollow plastic body comprising an upper portion and a lower portion connected to each other to form one single piece. The upper portion has a section larger than the lower portion in plan view and they are arranged advantageously so that a lower part of the lateral wall of the upper portion surrounds an upper part of the lateral wall of the lower portion.

In other words, this means that the lower edge of the lateral wall of the upper portion lies on a plane that intersects the lateral wall of the lower portion at a certain height.

The structure of the bowl according to the present invention has numerous advantages, both as regards greater rigidity with respect to the bowls of known type and as regards the ease with which it is possible to check the water level and top up if necessary.

A structure devised in this way, in addition to facilitating gripping of the bowl for lifting and/or moving thereof, advantageously allows stiffening means to be provided which are arranged between part of the upper portion and part of the lower portion.

The stiffening means are preferably made in one single piece with the hollow body and can comprise a plurality of radial fins, or ribbing which develops between the two facing portions along a broken or continuous line.

The stiffening means advantageously allow the body of the bowl to be reinforced and strengthened, preventing it from deforming when the pieces of sponge having different forms from the internal section of the bowl are forced inside it.

### Brief description of the drawings

Further characteristics and advantages of the present invention will be more evident from the following description, provided by way of example with reference to the accompanying drawings, in which:
- Figure 1 is a perspective view of the bowl according to the present invention;
- Figure 2 is a section view of the bowl according to a possible embodiment of the present invention;
- Figures 2A - 2C are plan views from below of three possible embodiments of a detail of the bowl of Figure 2;
- Figure 3 is a section view of a further possible embodiment of the bowl according to the present invention;
- Figure 3A is a top plan view of a detail of the bowl of Figure 3;
- Figure 4 is a section view of a further possible embodiment of the bowl according to the present invention;
- Figure 5 is a section view of the bowl according to another embodiment of the present invention;
- Figure 6 is a section view of the bowl according to a further embodiment of the present invention; and
- Figure 7 is a section view of the bowl according to another embodiment of the present invention.

### Modes for Carrying Out the Invention

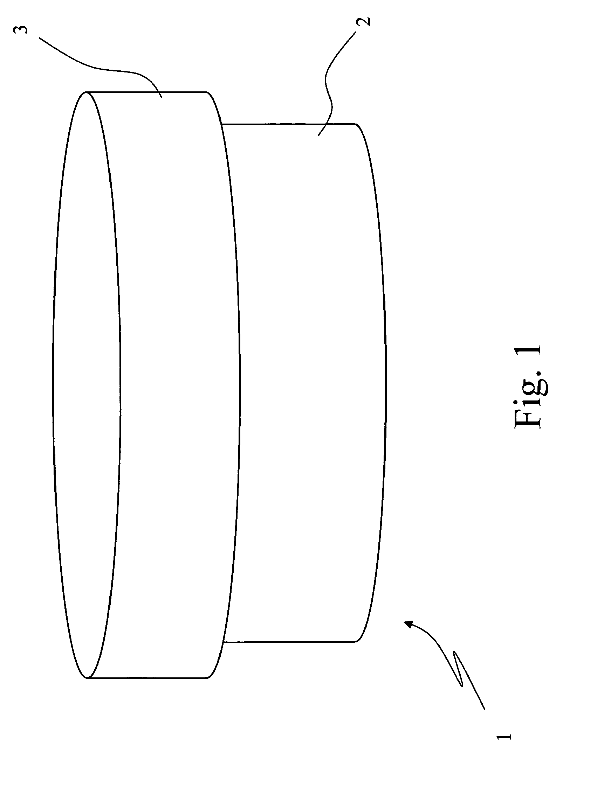

Figure 1 illustrates by way of example a bowl with cylindrical form according to the present invention which can be made of plastic by means of a moulding process or similar. The bowl has a hollow body 1 formed of two portions, one lower 2 and one upper 3, the latter having cross section greater than the lower portion. Obviously the differences in terms of height and diameter between the upper portion 3 and the lower portion 2 of the body of the bowl can be more or less accentuated with respect to what is shown here by way of example.

In a possible embodiment, not shown in an evident manner in the figures, the lower portion 2 can be slightly tapered towards the base, so that the empty bowls can be stacked on one another to reduce their bulk during storage and transport. Inside the hollow body 1 it is possible to house a synthetic sponge, not shown in the figures, generally consisting of several pieces which are forced into the inside of the bowl. In general, unless specified otherwise, the term "sponge" in the singular must be understood here and below as something which can also consist of several pieces, also of different forms and dimensions, which are forced into the inside of the bowl.

The synthetic sponge, made of foamed polyurethane for example, performs the dual function of supporting the stems of the flowers and the decorative elements of the flower arrangement and absorbing the water poured into the bowl.

The pieces of sponge are generally arranged inside the bowl already soaked in water and the flower arrangement is then created by inserting the stems of the flowers and the decorative elements inside the sponge.

Preferably, the pieces that make up the synthetic sponge have dimensions such as to protrude from the upper edge of the bowl when they are inserted inside it or, in other words, the sponge consisting of the various pieces is shaped so as to be generally higher than the bowl in order to allow insertion of the flowers of the arrangement also on the side protruding from the upper part.

Following creation of the flower arrangement, a further quantity of water can be easily poured into the bowl: in fact, the water in excess which cannot be absorbed by the sponge remains inside the bowl in the upper portion 3 which acts as a reservoir, and can thus be subsequently absorbed by the sponge. Furthermore, the upper portion 3 permits easy verification of the water level reached inside the body of the bowl and if necessary allows topping up without causing overflow of the water from the bowl.

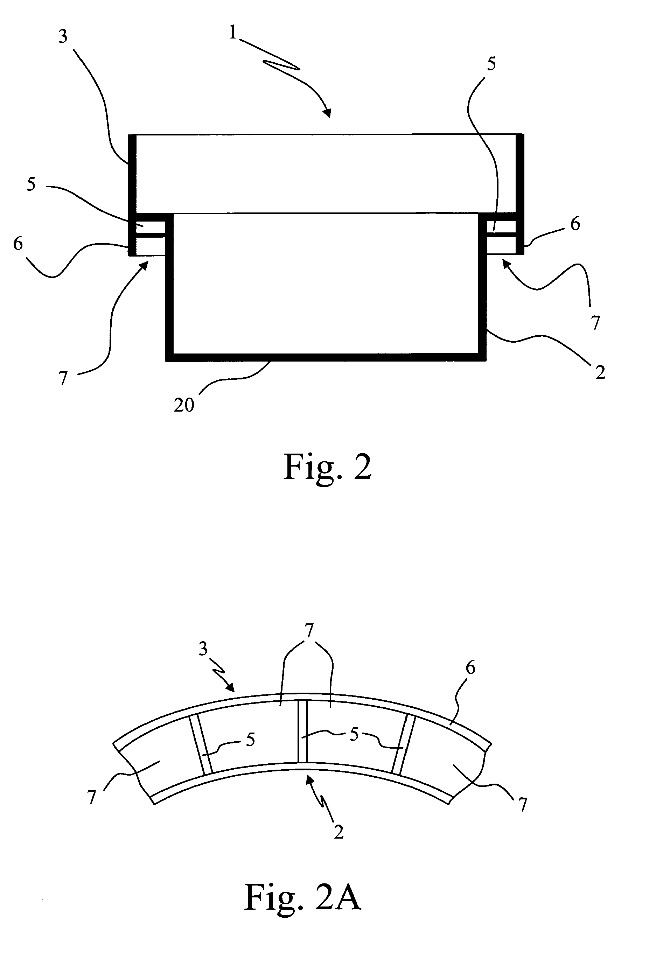

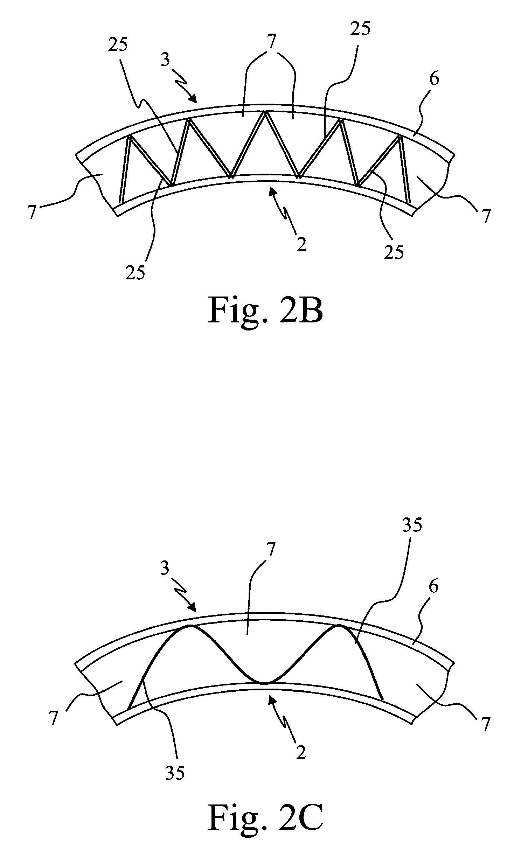

In the embodiment shown in Figure 2, a vertical section of the bowl is illustrated according to a plane parallel to the height of the cylindrical body passing through a diameter of the base circumference. The upper portion 3 comprises a downward extension 6 suitable for forming a seat 7, having the form of an annulus, at the level of the lower part of the upper portion 3 of the body of the bowl. In other words, the downward extension of the lateral wall of the upper portion and the outer surface of the lateral wall of the lower portion 2 define two facing opposite walls which form a seat 7 in the form of an annulus.

As can be seen better in Figure 2A, according to a first embodiment, radial fins 5 are positioned in the seat 7 between the downward extension 6 and the outer surface of the lower portion 2 and constitute stiffening means which reinforce the body of the bowl to prevent it from deforming. The stiffening means are preferably made in one piece with the body of the bowl.

The number of radial fins 5 can vary according to the dimensions of the bowl and according to the degree of stiffening desired. Obviously the greater the number of fins, the better the stiffening of the bowl.

Advantageously, the seat 7 is furthermore useful for facilitating gripping of the bowl: in fact, gripping is made easier for an operator who wishes to raise the bowl as he/she can grip it by inserting part of his/her fingers in the seat 7, in the space between a fin 5 and the adjacent one. Figures 2B and 2C show two further embodiments of the bowl according to the present invention, in which the stiffening means consist of a ribbing 25 formed of fins connected according to a "discontinuous" or saw tooth configuration (Figure 2B), or a continuous undulatory ribbing 35 (Figure 2C).

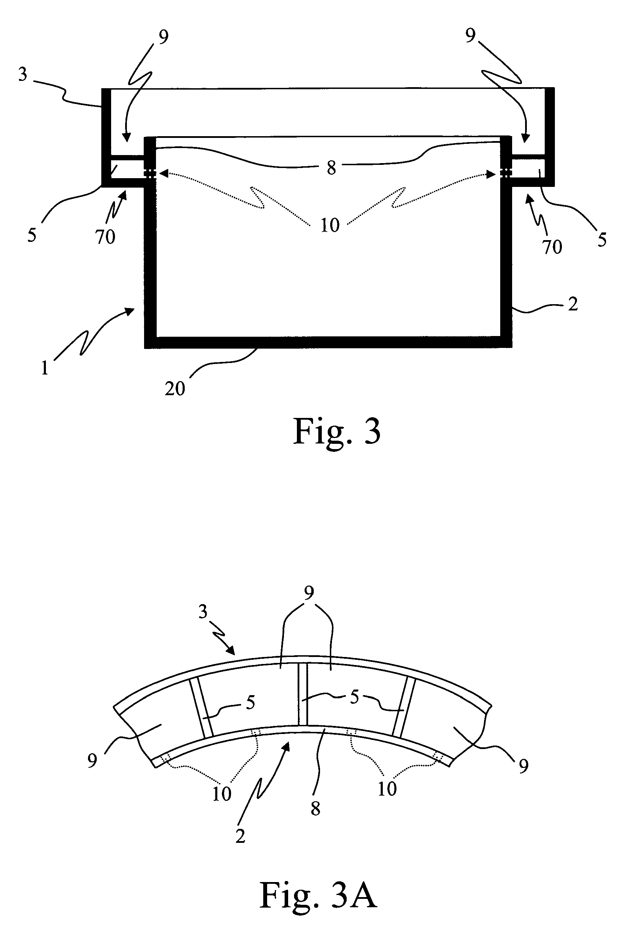

Figure 3 shows in section a further possible embodiment of the bowl according to the present invention, in which the stiffening means are arranged inside the upper portion 3 of the bowl of the body. In this embodiment there is no outer seat 7 which facilitates gripping of the bowl; however, the presence of the stiffening means inside the upper portion 3 prevents any deformations and/or yielding of the upper portion 3 when the bowl is gripped at the level of the step 70 formed between the lower portion 2 and the upper portion 3.

In this embodiment, the lower portion 2 comprises an upward extension 8 suitable for forming a seat 9, having the form of an annulus, inside the upper portion 3 of the body of the bowl. More specifically, the upward extension 8 and the inner surface of the upper portion 3 define two opposing walls which form a seat 9 in the form of an annulus.

As shown in the detail of Figure 3A the stiffening means, i.e. the fins 5, connect the upper portion 3 and the upward extension 8 of the lower portion 2. Also in this case, the stiffening means can be produced according to the conformations shown by the numerical references 25 and 35 in Figures 2B and 2C respectively. Unlike the embodiment previously described with reference to Figure 2, the upward extension 8 of the lower portion 2 forms a seat 9, having the form of an annulus, inside the upper portion 3 of the body of the bowl. In this way, part of the water poured into the bowl could remain inside the seat 9 reducing the volume of the upper portion 3 designed to act as a reservoir.

To overcome this drawback, openings 10 can be made on the upward extension 8 so that the seat 9 is in fluid communication with the internal space of the lower portion 2: in this way, also the spaces of the seat 9 between the fins can be filled with water. Obviously, also if the embodiments shown in the Figures 2B and 2C are adopted, openings 10 can be provided so that the space between the ribbings 25 or 35 is in fluid communication with the internal space of the bowl.

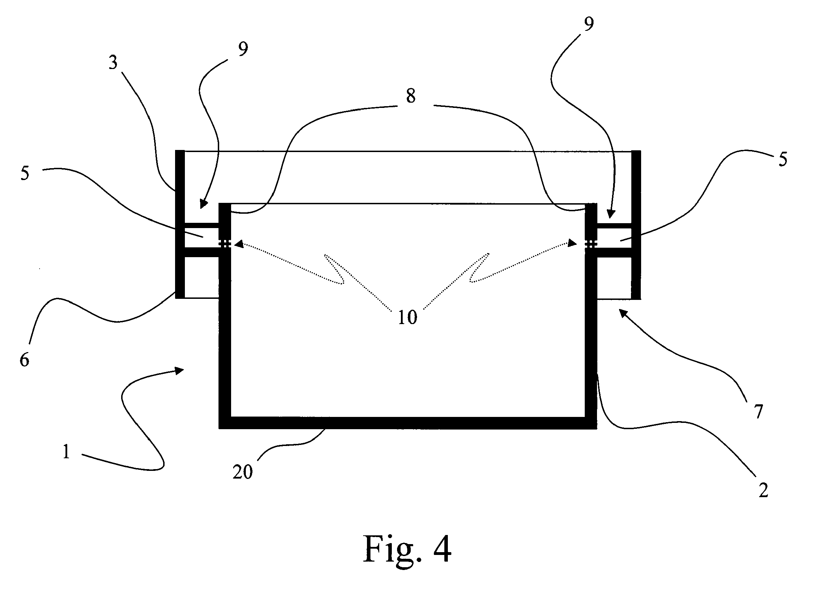

Figure 4 shows the embodiment previously described with reference to Figure 3 in which the upper portion 3 is furthermore provided with the downward extension 6 to form the double wall which delimits the seat 7 in the form of an annulus, but without the fins 5. The seat 7 can be used as a handgrip to facilitate transport and movement of the bowl.

Furthermore, the embodiments shown in Figures 2 and 3 can be adopted in the same bowl so as to provide stiffening means both inside the upper portion 3 (embodiment shown in Figure 3) and outside, arranged between the downward extension 6 and the outer surface of the lower portion 2 (embodiment shown in Figure 2).

The upward extensions 8 and downward extensions 6, of the lower portion 2 and the upper portion 3 respectively, are preferably made in one piece with the body of the bowl.

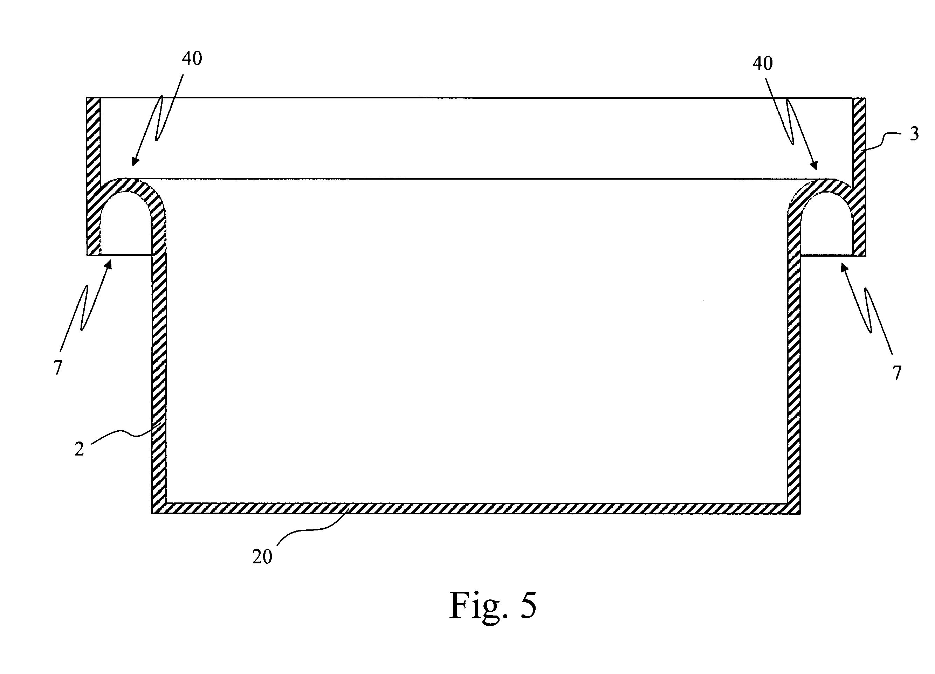

The bowl shown in Figure 5 comprises a lower portion 2 which includes a supporting base 20. The bowl furthermore comprises an upper portion 3, the plan view of which has a larger section than the lower portion 2. Between the lower portion 2 and the upper portion 3 an intermediate portion 40 is arranged which connects to the respective lateral walls of the portions 2 and 3. The intermediate portion 40 has a concave part facing towards the supporting base 20, or in any case facing downwards.

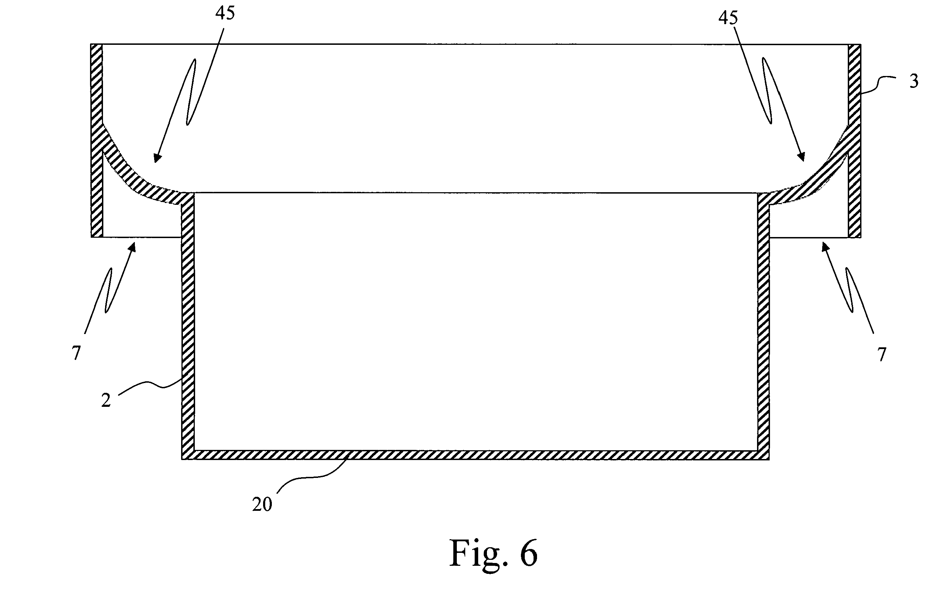

In the embodiment of Figure 6, the intermediate portion 45 is produced with a concave part facing upwards, or in any case towards the upper internal part of the bowl.

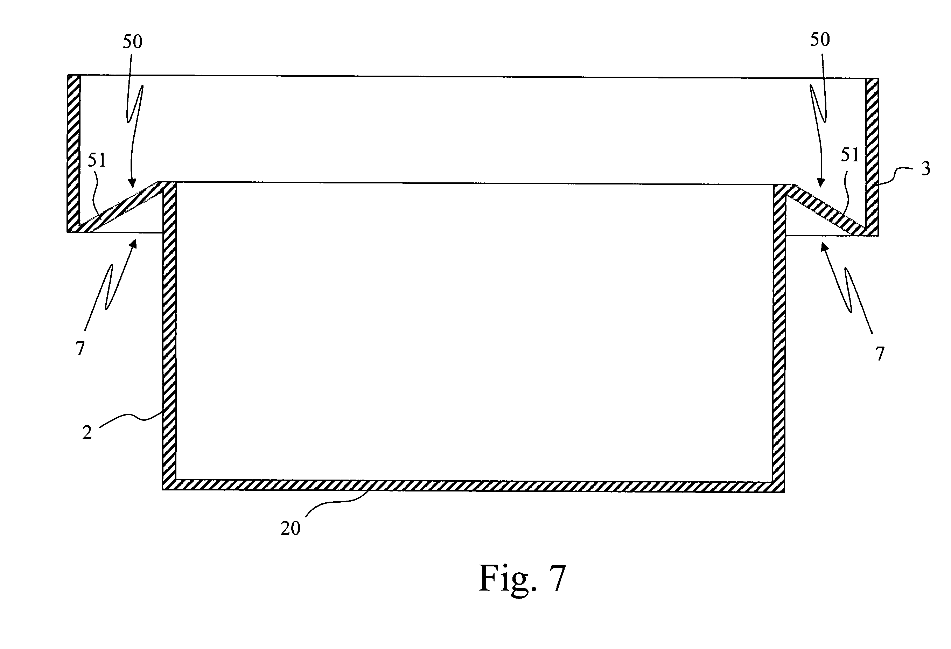

Another possible embodiment of the present invention is the one shown in Figure 7, where the intermediate portion 50 is provided with at least one wall 51 inclined with respect to the supporting base 20.

The intermediate portions 40, 45 and 50 of the embodiments illustrated in Figures 5 to 7 are shaped so as to give greater resistance to the deformability in the gripping area, i.e. in the area subject to the forces which tend to deform the structure of the bowl during lifting. Furthermore, the intermediate portions 40, 45 and 50 thus produced are able to absorb the deformations of the lower portion 2 under the action of the sponges forced into the bowl, without said deformations being transmitted to the upper portion.

All the embodiments described and illustrated so far facilitate gripping of the bowl and lifting and transport by gripping the bowl in the intermediate portion delimited by the lateral walls of the lower portion 2 and the upper portion 3.

It should be noted that although explicit reference is made to embodiments in which the body of the bowl has a circular section, the scope of the present invention also includes bowls having other forms, for example truncated cone or with rectangular, polygonal or oval cross section or other fancy forms, for example heart-shaped, in which the cross section of the upper portion has larger dimensions than the cross section of the lower portion.

The upper portion 3 with larger cross section than the lower portion 2 furthermore allows engagement with means for lifting and transport of the bowl shaped so that they can be arranged in a position resting against or coupling with the lower part of the upper portion 3. For example, for the cylindrically shaped bowl shown in the attached figures, a filiform circular support can be used having a diameter larger than that of the lower portion 2 and smaller than that of the upper portion 3. The lower portion 2 can pass inside the circular support which reaches the abutment position below the upper portion 3.

To allow transport and lifting of the bowl, the circular support can be attached by means of a plurality of movable hooks to a handgrip, or be constrained to a broad upper filiform slot which acts as a handgrip. Alternatively, a plurality of movable hooks can be engaged on the extensions 6 of the bowl and connected to a common handgrip.

## Claims

1. A bowl for flower arrangements consisting of a hollow plastic body (1) comprising an upper portion (3) and a lower portion (2) connected to each other to form one single piece, wherein said upper portion (3) has a larger section than said lower portion (2) in plan view, **characterised in that** a lower part of the lateral wall of said upper portion (3) surrounds an upper part of the lateral wall of said lower portion (2).

2. The bowl as claimed in claim 1, **characterised by** comprising stiffening means (5) which connect the reciprocally facing parts of the lateral walls of said upper portion (3) and said lower portion (2).

3. The bowl as claimed in claim 2, wherein said stiffening means (5) are made in one single piece with said hollow body (1).

4. The bowl as claimed in claim 1, wherein the lateral wall of the upper portion (3) of said hollow body (1) includes a downward extension (6).

5. The bowl as claimed in claim 4, wherein said stiffening means (5) are arranged between said downward extension (6) and the lateral wall of said lower portion (2) of said hollow body (1).

6. The bowl as claimed in claim 1, wherein the lateral wall of the lower portion (2) of said hollow body (1) includes an upward extension (8).

7. The bowl as claimed in claim 6, wherein said stiffening means (5) are arranged between said upward extension (8) and the lateral wall of said upper portion (3) of said hollow body (1).

8. The bowl as claimed in claim 6 or 7, wherein at least one opening (10) is provided in said upward extension (8) in the space between a stiffening means and an adjacent one.

9. The bowl as claimed in any one of the claims from 2 to 8, wherein said stiffening means include a plurality of radial fins (5).

10. The bowl as claimed in any one of the claims from 2 to 8, wherein said stiffening means include a ribbing (25, 35) which develops along a discontinuous or continuous line.

11. The bowl as claimed in claim 1, wherein the connection between said upper portion (3) and said lower portion (2) is made by an intermediate portion having a concave wall which forms an external seat (7) with concavity facing downwards.

12. The bowl as claimed in claim 1, wherein the connection between said upper portion (3) and said lower portion (2) is made by an intermediate portion having a concave wall which forms an external seat (7) with concavity facing upwards.

13. The bowl as claimed in claim 1, wherein the connection between said upper portion (3) and said lower portion (2) is made by an intermediate portion which forms an external seat (7) having a wall inclined with respect to the supporting base (20) of said lower portion (2).
